# NEUE EUROPÄISCHE PATENTSCHRIFT

(11) **EP 1 172 282 B2**
(45) Veröffentlichungstag und Bekanntmachung des Hinweises auf die Entscheidung über den Einspruch: **02.06.2010**
(45) Hinweis auf die Patenterteilung: 26.03.2008
(21) Anmeldenummer: 01116456.3
(22) Anmeldetag: 06.07.2001
(51) Int. Cl.: B62D 25/06

(54) **Fahrzeugverbundbauteil sowie Verfahren zur Herstellung eines Fahrzeugverbundbauteils**
Composite member for vehicle bodies and method for making a composite member for vehicle bodies
Elément composite pour carrosseries de véhicule et procédé de la fabrication d'un élément composite pour carrosserie de véhicule

(30) Priorität: 10.07.2000 DE 10033232
(43) Veröffentlichungstag der Anmeldung: 16.01.2002
(73) Patentinhaber: Webasto AG, 82131 Stockdorf (DE)
(72) Erfinder: Kralik, Martin, 82363 Weilheim (DE); Lante, Christoph Tobias, 38179 Gross Schwülper (DE)
(74) Vertreter: Fischer, Matthias

(56) Entgegenhaltungen:
- EP-A1- 0 995 667
- DE-A- 3 202 594
- DE-A1- 3 908 433
- FR-A- 1 113 551
- US-A- 4 150 186
- US-A- 4 150 286
- ALFRED EHRHARDT UND HERMANN FRANKE: 'Lueger Lexikon der Technik', Bd. 5, Juli 1972, ROWOHLT, REINBEK BEI HAMBURG, ISBN 3499190346 Artikel GERHARD MATTÉE: 'Fertigungstechnik und Arbeitsmaschinen', Seite 979

## Beschreibung

Die Erfindung betrifft ein Fahrzeugverbundbauteil, insbesondere Fahrzeugdachteil, mit einer Außenhaut, einer Innenschicht und einem Hohlkammern enthaltenden Distanzteil, das zwischen der Außenhaut und der Innenschicht angeordnet und mit diesen verbunden ist, gemäß dem Oberbegriff des Patentanspruchs 1. Die Erfindung betrifft ferner ein Verfahren zum Herstellen eines derartigen Fahrzeugverbundbauteils.

Ein derartiges Fahrzeugverbundbauteil ist aus der DE- A - 32 02 594 bekannt. Bei diesem werden eine Außenschicht, eine mittlere Waben-/Strukturschicht und eine halbsteife poröse Innenschicht mit einer Polster- und Dekorschicht in einem Heißpressverfahren zu einem Verbundbauteil zusammengefügt.

Aus der FR - A - 1 113 551 ist ein Dachteil für ein Fahrzeug bekannt, bei dem zwei Schichten unter Zwischenlage eines Hohlkammern aufweisenden Distanzteils unter Wärme- oder Infrarotstrahlungseinwirkung und Pressdruck in einem Formwerkzeug zu einem Sandwichbauteil zusammengefügt werden. Auf das Formwerkzeug wird zunächst ein Trennmittel und auf dieses wird eine Außenschicht aus thermisch aushärtbarem Harz aufgetragen. Auf diese Außenschicht wird eine Schicht aus mit Harz getränktem Glasfasergewebe aufgebracht. Anschließend wird das wabenartige Distanzteil aufgelegt, wobei es sich aufgrund seiner Flexibilität an die durch das Formwerkzeug vorgegebene Form anpasst.

Schließlich vervollständigt eine nochmalige Schicht aus mit Harz getränktem Glasfasergewebe das Dachteil, das durch Wärmeeinwirkung ausgehärtet wird.

Der vorliegenden Erfindung liegt die Aufgabe zugrunde, ein einfach herstellbares, formstabiles Fahrzeugverbundbauteil mit sehr hoher Oberflächengüte sowie ein Verfahren zur Herstellung des Fahrzeugverbundbauteils zu schaffen.

Diese Aufgabe wird durch ein Fahrzeugverbundbauteil mit den Merkmalen des Patentanspruchs 1 und durch ein Verfahren mit den Merkmalen des Patentanspruchs 11 gelöst. Vorteilhafte Ausgestaltungen der Erfindung sind in den jeweiligen abhängigen Ansprüchen angegeben.

Durch die Verwendung eines oberflächenfertigen Bauteils als Außenhaut, die mit dem Distanzteil verbunden wird, wird schon beim Herstellen dieser Verbindung die endgültige Außenseite des Verbundbauteils gebildet. Dementsprechend kann die Außenhaut ein in der gewünschten Farbe gefärbter Kunststoff sein.

Durch eine Vorformung der Außenhaut durch Tiefziehen, und das anschließende Verbinden mit dem mit Hohlkammern versehenen Distanzteil entsteht ein sehr leichtes, aber dennoch stabiles Fahrzeugverbundbauteil, insbesondere Fahrzeugdachteil, dessen Außenhaut in hoher Präzision und Oberflächengüte herstellbar ist.

Das Distanzteil weist - wie an sich aus der DE-A- 32 02 594 oder der FR- A - 1 113 551 bekannt - die Hohlkammern trennende Stege auf, die sich im Wesentlichen senkrecht zur Außenhaut erstrecken. Dadurch wird eine besonders hohe Formstabilität senkrecht zur Haupterstreckungsrichtung bzw. in vertikaler Richtung erreicht.

Das Distanzteil weist ferner erfindungsgemäß durch die Hohlkammern eine Durchlässigkeit für das flüssige oder schaumförmige Haftmittel auf. Durch das Eindiffundieren des Haftmittels in die Glasfasermatten und zu den Seitenwänden der Stege hin entsteht insgesamt eine sehr hohe Formsteifigkeit, die der eines Blechteils zumindest gleichkommt. Eine die Qualität der Außenhaut eventuell beeinträchtigende Wärmebehandlung, die bei dem in der FR - A - 1 113 551 beschriebenen Dachteil benötigt wird, ist für die Aushärtung des flüssigen bzw. schaumförmigen Haftmittels nicht erforderlich.

Durch die Verwendung einer einer durch Tiefziehen verformbaren thermoplastischen Folie, sind nahezu beliebige Formen für ein Fahrzeugverbundbauteil in entsprechenden Formwerkzeugen herstellbar. Die thermoplastische Folie setzt sich aus einer Trägerschicht, die vorteilhaft z. B. aus ASA-PC (Acrylnitril-Styrol-Acrylester-Polycarbonat) oder ASA-HDT (ASA mit erhöhter Warmformbeständigkeit) gebildet ist, einer sich nach außen daran anschließenden Sichtschicht, vorteilhaft aus farbigem PMMA (Polymethylmethacrylat), sowie optional aus einer weiter nach außen anschließenden Schutzschicht, vorteilhaft aus durchsichtigem PMMA, zusammen.

Die Außenhaut und das Distanzteil werden durch wenigstens eine zusätzliche Schicht ergänzt, die vorzugsweise von einer Glasfasermatte gebildet wird. Dabei ist die Glasfasermatte auf der von der Außenhaut abgewandten Seite des Distanzteils angeordnet. Sie wird ebenfalls durch aufgesprühtes Haftmittel mit dem Distanzteil verbunden.

Optional ist zur weiteren Aussteifung des Fahrzeugverbundbauteils eine weitere Glasfasermatte zwischen Außenhaut und Distanzteil angeordnet. Diese weitere Schicht kann alternativ auch von regellos bzw. ungerichtet angeordneten Verstärkungsfasern gebildet sein, die beispielsweise aufgespritzt werden.

Die Glasfasermatten weisen bevorzugt ein Flächengewicht von etwa 300 bis 400 Gramm je Quadratmeter und eine Dicke von etwa 0,3 Millimetern auf.

Das Haftmittel ist vorzugsweise ein Polyurethan. Es dient im Wesentlichen dazu, die Verbindung zwischen der Innenschicht und dem Distanzteil bzw. zwischen der Außenhaut und dem Distanzteil herzustellen und deren Festigkeit zu gewährleisten.

Das Distanzteil enthält bevorzugt eine Struktur in Waben- oder Wellenformen aus Karton, Aluminium oder Kunststoff, beispielsweise aus Polyamid oder Polyester.

Die Außenhaut weist insgesamt eine Dicke von z. B. 1 - 2 mm und vorzugsweise etwa 1,5 mm auf.

Ein erfindungsgemäßes Verfahren zur Herstellung eines Fahrzeugverbundbauteils enthält folgende Verfahrensschritte:
Einlegen einer als oberflächenfertiges Bauteil vorliegenden Außenhaut aus einer durch Tiefziehen verformbaren thermoplastischen Folie, die sich aus einer Trägerschicht und einer nach außen anschließenden Sichtschicht zusammensetzt und die während des Herstellungsprozesses in der Form als Trägerschicht fungiert, in eine erste Formhälfte eines Formwerkzeugs; Einlegen einer Glasfasermatte in die zweite Formhälfte; Aufbringen eines Haftmittels auf die Glasfasermatte in der zweiten Formhälfte und auf die Rück- oder Innenseite der Außenhaut in der ersten Formhälfte bzw. auf Glasfasermatten an der Unter- und/oder Oberseite eines mit Hohlkammern versehenen Distanzteils; Einfügen des Distanzteils zwischen die beiden Formhälften bei noch flüssigen bzw. haftfähigen Haftmittelschichten; Schließen der ersten und der zweiten Formhälfte mit Aufprägen der endgültigen Form; Diffundieren des Haftmittels in das Distanzteil und Aushärten des Haftmittels.

Je nach Anordnung des Formwerkzeugs ist die erste Formhälfte beispielsweise eine untere Formhälfte und die zweite Formhälfte die obere Formhälfte, jedoch kann grundsätzlich das Verfahren auch bei umgekehrter Zuordnung oder bei Anordnung mit einer rechten und einer linken Formhälfte entsprechend ausgeführt werden.

Zur weiteren Erhöhung der Stabilität wird vorzugsweise das Distanzteil vor dem Einbringen an seiner der Innenseite der Außenhaut zugewandten Fläche mit einer weiteren Glasfasermatte versehen.

Das Aufbringen des Haftmittels kann bevorzugt mittels eines durch einen Roboter geführten Sprüh- bzw. Schäumwerkzeugs auf die Glasfasermatte in der oberen Formhälfte und auf die Innenseite der Außenhaut unmittelbar im Werkzeug bei noch geöffneten Formwerkzeughälften erfolgen.

Als weiterer Verfahrensschritt erfolgt mittels im Werkzeug vorgesehener Schieber nach dem Aushärten ein Abtrennen des zur Halterung der Außenhaut und der Glasfasermatte dienenden Randbereichs des Fahrzeugdachteils.

Nachfolgend sind Ausführungsbeispiele der Erfindung anhand der Zeichnung beschrieben. Es zeigt:
- Figur 1: einen Schnitt durch den Randbereich eines Formwerkzeugs bei der Herstellung eines ersten Fahrzeugverbundteils, insbesondere Fahrzeugdachteils, in geöffnetem Zustand,
- Figur 2: einen Schnitt durch den Randbereich eines Formwerkzeugs bei der Herstellung eines zweiten Fahrzeugverbundteils in geöffnetem Zustand, und
- Figur 3: einen Schnitt durch den Randbereich eines Formwerkzeugs in geschlossenem Zustand.

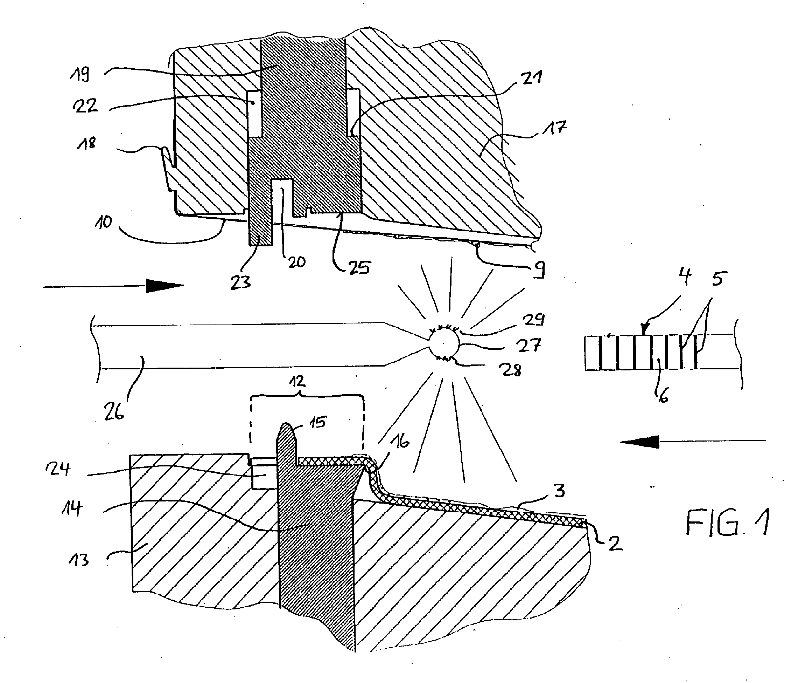

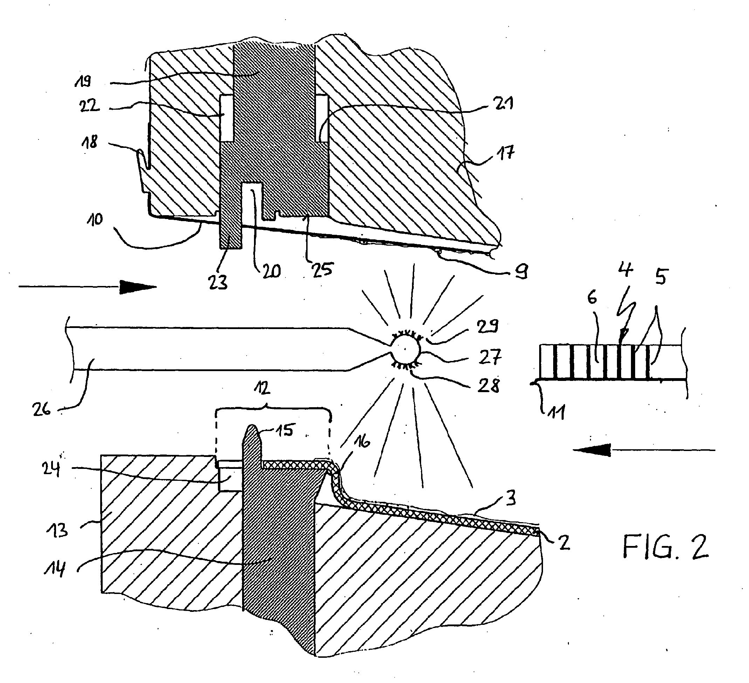

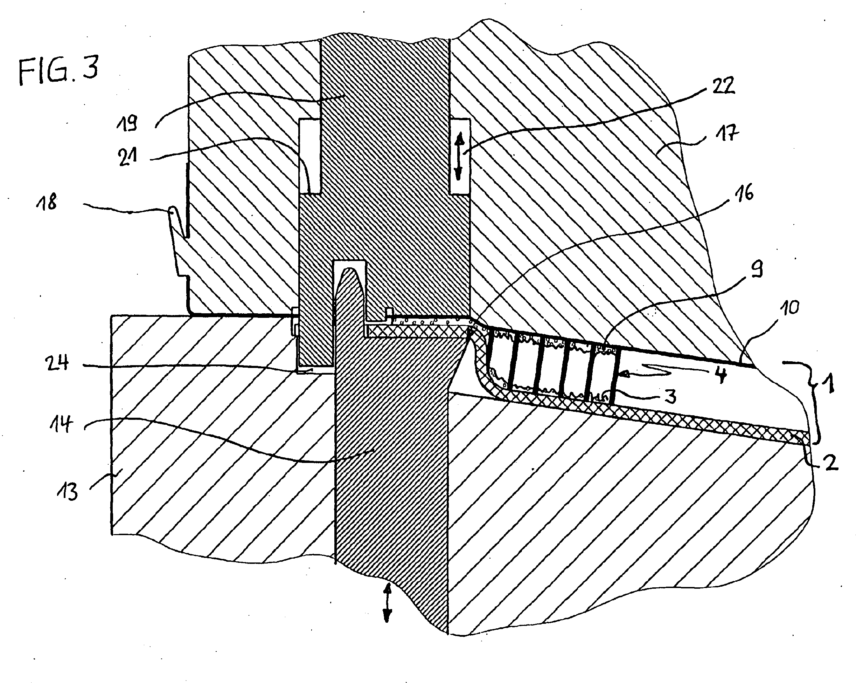

Ein zum Einkleben in ein Fahrzeugdach vorgefertigtes Fahrzeugdachteil 1, dessen Randbereich im Querschnitt in Figur 3 in seinem kompletten Aufbau dargestellt ist, setzt sich aus einer beim Herstellungsprozess als Trägerschicht dienenden Außenhaut 2, einer auf deren Innenseite durch Aufsprühen oder Aufschäumen aufgetragenen Haftmittelschicht 3 (siehe Figur 1 oder 2), einem Distanzteil 4, einer Haftmittelschicht 9 und einer oberen Glasfasermatte 10 zusammen.

Beim Ausführungsbeispiel gemäß Figur 2 ist zusätzlich eine untere Glasfasermatte 11 vorgesehen, die im Ausführungsbeispiel an der Unterseite des Distanzteils 4 angeordnet ist. Wenn hierin bezüglich des Fahrzeugdachteils 1 von "untere" und "obere" gesprochen wird, so bezieht sich diese Lageangabe auf die in den Figuren 1 bis 3 gezeigten Positionen beim Herstellungsprozess, während eine Einbaulage des Fahrzeugdachteils 1 im Fahrzeug beispielsweise eine um 180° gedrehte Position darstellt.

Das Distanzteil 4 setzt sich aus einem wabenförmigen Strukturteil aus beispielsweise Karton, Aluminium oder Kunststoff mit vertikalen Stegen 5 und dazwischen angeordneten Hohlkammern 6 zusammen. Das Strukturteil kann auch aus wellenförmigen Schichten gebildet sein, wobei die Wellen die Stege 5 bilden. Da für die Stege 5 dünnwandiges Material verwendet wird, ist das Distanzteil 4 sehr leicht. Die Hohlkammern 6 weisen an ihrer Ober- und Unterseite für das Haftmittel 3 bzw. 9 durchlässige Öffnungen bzw. Poren auf, die ein Eindiffundieren des Haftmittels bis in den Bereich der Stege 5 ermöglichen.

Das für die Herstellung verwendete Formwerkzeug setzt sich aus einer unteren Werkzeughälfte 13 mit einem senkrecht zur Erstreckungsrichtung der Außenhaut 2 bewegbaren Schieber 14 und einer oberen Werkzeughälfte 17 mit einem ebenfalls senkrecht zur Erstreckungsrichtung der Außenhaut 2 bewegbaren Schieber 19 zusammen.

Am Schieber 14 der unteren Werkzeughälfte 13 sind voneinander beabstandet mehrere Zentrierstifte 15 angeordnet, die zur Aufnahme und Halterung der in die untere Werkzeughälfte 13 eingelegten Außenhaut 2 dienen. Die Außenhaut 2 kann zuvor durch Tiefziehen in eine für das jeweilige Fahrzeugdachteil spezifische Form gebracht worden oder sie wird im Formwerkzeug in die endgültige Form gebracht.

An der oberen Werkzeughälfte 17 sind an der Außenseite mehrere voneinander beabstandete Halterungen 18 vorgesehen, welche in Verbindung mit am Schieber 19 vorgesehenen Vorsprüngen 23 zur Halterung und Zentrierung der oberen Glasfasermatte 9 dienen. Die Vorsprünge 23 dienen weiterhin in Verbindung mit einer einwärts davon angeordneten Nut 20 zur Zentrierung und Aufnahme der Zentrierstifte 15 beim Schließen der Werkzeughälften 13 und 17. Noch weiter einwärts von der Nut 20 ist am oberen Schieber 19 eine Gegenfläche 25 angeordnet, an welcher in geschlossenem Zustand des Werkzeugs ein Randbereich 12 der Außenhaut 2 anliegt (siehe Figuren 1 und 2). Die innere Kante der Gegenfläche 25 am Schieber 19 liegt dabei gegenüber einer Abkantschneide 16, welche an der inneren Kante des Schiebers 14 vorgesehen ist. Die untere Werkzeughälfte 13 weist von den Zentrierstiften 15 aus nach außen gesehen einen Aufnahmeraum 24 für die Vorsprünge 23 des oberen Werkzeugs 19 auf.

Der obere Schieber 19 ist in einer Führungskammer 22 des oberen Werkzeugs 17 verschiebbar geführt. Eine an der Rückseite eines verbreiterten Kopfes des Schiebers 19 vorgesehene Anschlagfläche 21 begrenzt in Verbindung mit dem Boden der Führungskammer 22 die Bewegung des Schiebers 19.

Nach Einlegen der Außenhaut 2 in die untere Werkzeughälfte 13 und der oberen Glasfasermatte 10 in die obere Werkzeughälfte 17 wird mittels eines zwischen die geöffneten Werkzeughälften eingeführten Sprühwerkzeugs 26, das einen Sprühkopf 27 mit einem Satz nach unten gerichteter Düsen 28 und einem Satz nach oben gerichteter Düsen 29 aufweist, Haftmittel 3 auf die Innenseite der Außenhaut 2 und Haftmittel 9 auf die Unterseite der oberen Glasfasermatte 10 aufgesprüht bzw. aufgeschäumt. Als Haftmittel 9 wird dabei bevorzugt Polyurethan oder Polyurethan-Schaum verwendet. Dieser hat eine Aushärtezeit von etwa 30 Sekunden. Solange das Polyurethan bzw. der Polyurethan-Schaum noch flüssig ist, wird das Distanzteil 4 zwischen die geöffneten Werkzeughälften 13 und 17 eingeführt und auf die vom nach oben gekröpften Randbereich 12 begrenzte, wannenförmig gewölbte Innenseite der Außenhaut 2 aufgelegt.

Beim Schließen des Werkzeugs werden zunächst die untere Werkzeughälfte 13 und die obere Werkzeughälfte 17 aufeinander zu bewegt. Dabei werden die Zentrierstifte 15 von der Nut 20 und die Vorsprünge 23 vom Aufnahmeraum 24 aufgenommen. Der Außenbereich 12 der Außenhaut 2 wird vom Schieber 14 fest gegen die Gegenfläche 25 gedrückt. In diesem Zustand bei geschlossenem Werkzeug (Figur 3) diffundiert das noch flüssige Haftmittel 3 in die Hohlräume des Distanzteils 4 und verbindet dort, wie in Figur 3 gezeigt, die Verbindungsbereiche der Stege 5 mit der Glasfasermatte 10 bzw. 11. Hierdurch erreicht das Distanzteil 4 eine sehr hohe Formstabilität bei gleichzeitig sehr geringem Gewicht. Das Haftmittel 3 bzw. 9 wird auch auf einen innen liegenden Teil des Randbereichs 12 im Bereich des gekröpften Randes der Außenhaut 2 aufgebracht, so dass in diesem Bereich die Außenhaut 2 umlaufend wasserdicht mit der oberen Glasfasermatte 10 verbunden wird.

Nach dem Aushärten des Haftmittels 3 bzw. 9 werden in einem weiteren Schritt der untere Schieber 14 und der obere Schieber 19 nach oben bewegt, wobei die Abkantschneide 16 den Randbereich 12 abtrennt. Das fertige Fahrzeugdachteil kann nun nach dem Auseinanderfahren der Werkzeughälften 13 und 17 der unteren Werkzeughälfte 13 entnommen werden. Da die vollständig vorgefertigte Au-ßenhaut 2 aus thermoplastischem Kunststoff neben einer Trägerschicht aus Polycarbonat, einer nach außen anschließenden Sichtschicht aus in Fahrzeugfarbe eingefärbtem PMMA, optional ergänzt durch eine außen auf die Sichtschicht aufgebrachte Schutzschicht aus durchsichtigem PMMA, besteht, ist das Fahrzeugdachteil bereits in gebrauchsfertigem Zustand und kann nach Anlieferung beim Fahrzeughersteller am Montageband beispielsweise durch Kleben ins Fahrzeug eingefügt werden.

Da die Außenhaut 2 eine Dicke von nur etwa 1,5 Millimeter aufweist, das Distanzteil 4 aus sehr leichtem, dünnwandigen Material besteht und auch die Glasfasermatten 10 bzw. 11 sowie die Haftmittelschichten 3 bzw. 9 nur ein sehr geringes Gewicht aufweisen, ist das fertige Fahrzeugdachteil 1 bei hoher Stabilität sehr leicht. Dadurch ist es möglich, den Schwerpunkt eines Fahrzeuges sehr niedrig zu halten.

Das Fahrzeugverbundbauteil kann auch als Kofferraumdeckel oder als sonstiges flächiges Fahrzeugaußenteil gebildet sein.

Die untere und die obere Formhälfte 13 bzw. 17 können in ihrer Anordnung und ihrer Funktion gegeneinander ausgetauscht sein und können statt mit horizontaler Trennebene auch mit einer vertikalen Trennebene angeordnet sein.

### Bezugszeichenliste

- 1: Fahrzeugdachteil
- 2: Außenhaut
- 3: Haftmittel
- 4: Distanzteil
- 5: Steg
- 6: Hohlkammer
- 9: Haftmittel
- 10: obere Glasfasermatte
- 11: untere Glasfasermatte
- 12: Randbereich
- 13: untere Formwerkzeughälfte
- 14: Schieber
- 15: Zentrierstift
- 16: Abkantschneide
- 17: obere Formwerkzeughälfte
- 18: Halterung
- 19: Schieber
- 20: Nut
- 21: Anschlagfläche
- 22: Führungskammer
- 23: Vorsprung
- 24: Aufnahmeraum
- 25: Gegenfläche
- 26: Sprühwerkzeug
- 27: Sprühkopf
- 28: Düse
- 29: Düse

## Patentansprüche

1. Fahrzeugverbundbauteil (1), insbesondere Fahrzeugdachteil, mit einer Außenhaut (2), einer Innenschicht (10) und einem Hohlkammern (6) enthaltenden Distanzteil (4), das zwischen der Außenhaut (2) und der Innenschicht (10) angeordnet und mit diesen mittels eines Haftmittels (3, 9) verbunden ist, wobei die Außenhaut (2) als oberflächenfertiges Bauteil für die Verbindung mit dem Distanzteil (4) vorgesehen ist,
**dadurch gekennzeichnet,**
**dass** die Außenhaut (2) von einer durch Tiefziehen verformbaren thermoplastischen Folie gebildet ist, die sich aus einer Trägerschicht und einer sich nach außen anschließenden Sichtschicht zusammensetzt, und dass das Distanzteil (4) eine offene wabenartige Struktur mit einer Durchlässigkeit für das Haftmittel (3, 9) und die Hohlkammern (6) trennende Stege (5) aufweist, die sich im Wesentlichen senkrecht zur Außenhaut (2) erstrecken.

2. Fahrzeugverbundbauteil nach Anspruch 1,
**dadurch gekennzeichnet, dass** die Außenhaut (2) außen anschließend an die Sichtschicht eine Schutzschicht aufweist.

3. Fahrzeugverbundbauteil nach einem der Ansprüche 1 bis 2,
**dadurch gekennzeichnet, dass** das Haftmittel (3, 9) Polyurethan ist.

4. Fahrzeugverbundbauteil nach einem der vorhergehenden Ansprüche,
**dadurch gekennzeichnet, dass** die Innenschicht (10) von einer Glasfasermatte (10) gebildet ist.

5. Fahrzeugverbundbauteil nach einem der vorhergehenden Ansprüche,
**dadurch gekennzeichnet, dass** die Trägerschicht der thermoplastischen Folie aus ASA, ASA-PC oder ASA-HDT besteht.

6. Fahrzeugverbundbauteil nach einem der vorhergehenden Ansprüche,
**dadurch gekennzeichnet, dass** die Sichtschicht aus farbigem PMMA, sowie die optional weiter nach außen anschließende Schutzschicht aus durchsichtigem PMMA oder aus einem UV-aushärtbaren Lack besteht

7. Fahrzeugverbundbauteil nach einem der vorhergehenden Ansprüche,
**dadurch gekennzeichnet, dass** als weitere Schicht zwischen der Außenhaut (2) und dem Distanzteil (4) eine zusätzliche Glasfasermatte (11) oder regellos verteilte Verstärkungsfasern angeordnet ist bzw. sind.

8. Fahrzeugverbundbauteil nach einem der vorhergehenden Ansprüche,
**dadurch gekennzeichnet, dass** die Glasfasermatte bzw. Glasfasermatten (10 bzw. 11) ein Flächengewicht von etwa 300 bis 400 Gramm je Quadratmeter und eine Dicke von etwa 0,3 mm aufweist bzw. aufweisen.

9. Fahrzeugverbundbauteil nach einem der vorhergehenden Ansprüche,
**dadurch gekennzeichnet, dass** das Distanzteil (4) eine Struktur in Waben- oder Wellenformen aus Karton, Aluminium oder Kunststoff, beispielsweise aus Polyamid oder Polyester, aufweist.

10. Verfahren zum Herstellen eines Fahrzeugverbundbauteils mit einer Außenhaut aus einer durch Tiefziehen verformbaren thermoplastischen Folie, die sich aus einer Trägerschicht und einer nach außen anschließenden Sichtschicht zusammensetzt , mit einer Innenschicht (10) und mit einem Hohlkammern (6) enthaltenden Distanzteil (4), das zwischen der Außenhaut (2) und der Innenschicht (10) angeordnet und mit diesen verbunden ist, mit folgenden Verfahrensschritten:
Einlegen der als oberflächenfertiges Bauteil vorliegenden Außenhaut (2) als Trägerschicht in eine erste Formhälfte (13) eines Formwerkzeugs, Einlegen einer Glasfasermatte (10) in die zweite Formhälfte (17) des Formwerkzeugs,
Aufbringen eines Haftmittels (9, 3) auf die Glasfasermatte (10) in der zweiten Formhälfte (17) und auf die Außenhaut (2) in der ersten Formhälfte (13),
Einfügen eines Distanzteils (4) zwischen die beiden noch flüssigen Haftmittelschichten (9, 3) an der Glasfasermatte (10) bzw. der Außenhaut (2), und
Schließen der beiden Formhälften (13, 17), wobei das Fahrzeugverbundbauteil in seine endgültige Form geprägt wird und das Haftmittel (3, 9) in das Distanzteil (4) diffundiert und aushärtet.

11. Verfahren nach Anspruch 10,
**dadurch gekennzeichnet, dass** die erste Formhälfte (13) eine untere Formhälfte und die zweite Formhälfte (17) eine obere Formhälfte des Formwerkzeugs ist und dass die Außenhaut (2) als vorgeformtes, tiefgezogenes Bauteil in die untere Formhälfte (13) eingelegt wird.

12. Verfahren nach Anspruch 10 oder 11,
**dadurch gekennzeichnet, dass** das Distanzteil (4) vor dem Einbringen an seiner der Innenseite der Außenhaut (2) zugewandten Fläche mit einer weiteren Glasfasermatte (11) versehen wird.

13. Verfahren nach einem der Ansprüche 10 bis 12,
**dadurch gekennzeichnet, dass** nach dem Aushärten des Haftmittels über im Werkzeug angeordnete bewegliche Schieber (14, 19) ein der Halterung der Außenhaut (2) und der Glasfasermatte (10) dienender Randbereich (12) des Fahrzeugverbundteils durch Stanzen abgetrennt wird.

## Claims

1. Composite member for vehicle bodies (1), in particular a vehicle roof part, having an outer skin (2), an inner layer (10) and a spacer part (4) containing hollow chambers (6), which is arranged between the outer skin (2) and the inner layer (10) and is joined to these by means of an adhesive (3, 9), the outer skin (2) being provided as a finished surface component to be joined to the spacer part (4),
**characterized in that** the outer skin (2) is formed from a thin thermoplastic sheet which can be deformed by deep drawing and which is assembled from a carrier layer and a visible layer adjoining on the outside, and **in that** the spacer part (4) has an open honeycomb-like structure with a permeability to the adhesive (3, 9) and webs (5) which separate the hollow chambers (6) and which extend substantially at right angles to the outer skin (2).

2. Composite member for vehicle bodies according to Claim 1, **characterized in that** the outer skin (2) has a protective layer adjoining the visible layer on the outside.

3. Composite member for vehicle bodies according to either of Claims 1 and 2, **characterized in that** the adhesive (3, 9) is polyurethane.

4. Composite member for vehicle bodies according to one of the preceding claims, **characterized in that** the inner layer (10) is formed from a glass fibre mat (10).

5. Composite member for vehicle bodies according to one of the preceding claims, **characterized in that** the carrier layer of the thin thermoplastic sheet consists of ASA, ASA-PC or ASA-HDT.

6. Composite member for vehicle bodies according to one of the preceding claims, **characterized in that** the visible layer consists of coloured PMMA, and the protective layer optionally further adjoining on the outside consists of transparent PMMA or of a UV-curable varnish.

7. Composite member for vehicle bodies according to one of the preceding claims, **characterized in that** an additional glass fibre mat (11) or randomly distributed reinforcing fibres is or are arranged as a further layer between the outer skin (2) and the spacer part (4).

8. Composite member for vehicle bodies according to one of the preceding claims, **characterized in that** the glass fibre mat or glass fibre mats (10 or 11) has or have a weight per unit area of about 300 to 400 grams per square metre and a thickness of about 0.3 mm.

9. Composite member for vehicle bodies according to one of the preceding claims, **characterized in that** the spacer part (4) has a structure in honeycomb or corrugated form made of board, aluminium or plastics, for example of polyamide or polyester.

10. Method for producing a composite member for vehicle bodies having an outer skin made of a thin thermoplastic sheet which can be deformed by deep drawing and which is assembled from a carrier layer and a visible layer adjoining on the outside, having an inner layer (10) and having a spacer part (4) containing hollow chambers (6), which is arranged between the outer skin (2) and the inner layer (10) and is joined to these, having the following method steps:
laying the outer skin (2), present as a finished surface component, as a carrier layer in a first mould half (13) of a mould,
laying a glass fibre mat (10) in the second mould half (17) of the mould,
applying an adhesive (9, 3) to the glass fibre mat (10) in the second mould half (17) and to the outer skin (2) in the first mould half (13),
introducing a spacer part (4) between the two still liquid adhesive layers (9, 3) on the glass fibre mat (10) and the outer skin (2) respectively,
closing the two mould halves (13, 17), the composite member for vehicle bodies being pressed into its final form and the adhesive (3, 9) diffusing into the spacer part (4) and curing.

11. Method according to Claim 10, **characterized in that** the first mould half (13) is a lower mould half and the second mould half (17) is an upper mould half of the mould, and **in that** the outer skin (2) is laid in the lower mould half (13) as a preformed, deep drawn component.

12. Method according to Claim 10 or 11, **characterized in that,** before being introduced, the spacer part (4) is provided with a further glass fibre mat (11) on its surface facing the inner side of the outer skin (2).

13. Method according to one of Claims 10 to 12, **characterized in that,** following the curing of the adhesive, an edge region (12) of the composite member for vehicle bodies that is used to hold the outer skin (2) and the glass fibre mat (10) is separated off by punching via movable sliders (14, 19) arranged in the mould.

## Revendications

1. Elément structurel composite (1) pour véhicules, notamment partie de toit de véhicule comprenant une enveloppe extérieure (2), une couche intérieure (10) et une pièce d'espacement (4) qui renferme des cavités (6) et est interposée entre ladite enveloppe extérieure (2) et ladite couche intérieure (10), auxquelles elle est reliée au moyen d'un agent d'adhésion ou d'adhérence (3, 9), ladite enveloppe extérieure (2) étant prévue en tant que pièce structurelle à surface finie, conçue pour être reliée à ladite pièce d'espacement (4),
**caractérisé par le fait**
**que** l'enveloppe extérieure (2) est constituée d'une feuille thermoplastique déformable par emboutissage profond, se composant d'une couche substrat et d'une couche visible située dans la continuité directe, vers l'extérieur et que la pièce d'espacement (4) présente une structure ouverte du type nid d'abeilles, douée de perméabilité à l'agent d'adhérence (3, 9), et des membrures (5) qui séparent les cavités (6) et s'étendent, pour l'essentiel, perpendiculairement à l'enveloppe extérieure (2).

2. Elément structurel composite pour véhicules, selon la revendication 1,
**caractérisé par le fait que** l'enveloppe extérieure (2) comporte une couche protectrice se rattachant extérieurement à la couche visible.

3. Elément structurel composite pour véhicules, selon l'une des revendications 1 à 2,
**caractérisé par le fait que** l'agent d'adhérence (3, 9) est du polyuréthane.

4. Elément structurel composite pour véhicules, selon l'une des revendications précédentes,
**caractérisé par le fait que** la couche intérieure (10) est constituée d'un mat (10) en fibres de verre.

5. Elément structurel composite pour véhicules, selon l'une des revendications précédentes,
**caractérisé par le fait que** la couche substrat de la feuille thermoplastique est constituée d'ASA, d'ASA-PC ou d'ASA-HDT.

6. Elément structurel composite pour véhicules, selon l'une des revendications précédentes,
**caractérisé par le fait que** la couche visible est constituée de PMMA coloré et la couche protectrice, facultativement située dans la continuité directe, davantage vers l'extérieur, est constituée de PMMA translucide ou d'une laque durcissable aux UV.

7. Elément structurel composite pour véhicules, selon l'une des revendications précédentes,
**caractérisé par le fait qu'**un mat supplémentaire (11) en fibres de verre, ou des fibres de renforcement réparties de manière désordonnée, est (sont) interposé(es) entre l'enveloppe extérieure (2) et la pièce d'espacement (4), en tant que couche additionnelle.

8. Elément structurel composite pour véhicules, selon l'une des revendications précédentes,
**caractérisé par le fait que** le ou les mat(s) (10, respectivement 11) en fibres de verre présente(nt) un poids superficiel d'environ 300 à 400 grammes par mètre carré, et une épaisseur d'environ 0,3 mm.

9. Elément structurel composite pour véhicules, selon l'une des revendications précédentes,
**caractérisé par le fait que** la pièce d'espacement (4) comporte une structure en forme de nid d'abeilles ou d'ondulations, consistant en du carton, en de l'aluminium ou en une matière plastique, par exemple un polyamide ou un polyester.

10. Procédé de fabrication d'un élément structurel composite pour véhicules comprenant une enveloppe extérieure en une feuille thermoplastique déformable par emboutissage profond, composée d'une couche substrat et d'une couche visible située dans la continuité directe, vers l'extérieur ; une couche intérieure (10) ; et une pièce d'espacement (4) qui renferme des cavités (6) et est interposée entre ladite enveloppe extérieure (2) et ladite couche intérieure (10), auxquelles elle est reliée, englobant les étapes opératoires suivantes :
insertion en tant que couche substrat, dans un premier demi-moule (13) d'un outil de formage, de l'enveloppe extérieure (2) se présentant comme une pièce structurelle à surface finie,
insertion d'un mat (10) en fibres de verre dans le second demi-moule (17) dudit outil de formage,
dépôt d'un agent d'adhérence (9, 3) sur le mat (10) en fibres de verre, dans le second demi-moule (17), et sur l'enveloppe extérieure (2) dans le premier demi-moule (13), interposition d'une pièce d'espacement (4) entre les deux couches d'agent d'adhérence (9, 3) encore liquides, respectivement sur le mat (10) en fibres de verre et sur l'enveloppe extérieure (2),
et
fermeture des deux demi-moules (13, 17), l'élément structurel composite pour véhicules étant alors matricé jusqu'à sa forme définitive, et l'agent d'adhérence (3, 9) se diffusant dans la pièce d'espacement (4) et subissant un durcissement complet.

11. Procédé selon la revendication 10,
**caractérisé par le fait que** le premier demi-moule (13) constitue un demi-moule inférieur, et le second demi-moule (17) constitue un demi-moule supérieur de l'outil de formage ; et **par le fait que** l'enveloppe extérieure (2) est insérée dans le demi-moule inférieur (13) en tant que pièce structurelle préformée, venue d'emboutissage profond.

12. Procédé selon la revendication 10 ou 11,
**caractérisé par le fait que**, préalablement à l'insertion, la pièce d'espacement (4) est pourvue d'un mat supplémentaire (11) en fibres de verre sur sa surface tournée vers la face intérieure de l'enveloppe extérieure (2).

13. Procédé selon l'une des revendications 10 à 12,
**caractérisé par le fait que**, à l'issue du durcissement complet de l'agent d'adhérence, une région marginale (12) de l'élément structurel composite pour véhicules, servant à retenir l'enveloppe extérieure (2) et le mat (10) en fibres de verre, est séparée par poinçonnage au moyen d'organes coulissants mobiles (14, 19) logés dans l'outil.
